# EUROPÄISCHE PATENTSCHRIFT

(11) **EP 4 275 963 B1**
(45) Veröffentlichungstag und Bekanntmachung des Hinweises auf die Patenterteilung: **02.07.2025**
(21) Anmeldenummer: 22172359.6
(22) Anmeldetag: 09.05.2022
(51) Int. Cl.: B60R 13/02

(54) **KRAFTFAHRZEUG-SEITENWANDKONSTRUKTION, SEITENWANDELEMENTE FÜR EINE KRAFTFAHRZEUG-SEITENWANDKONSTRUKTION SOWIE MONTAGEVERFAHREN**
MOTOR VEHICLE SIDE WALL STRUCTURE, SIDE WALL ELEMENTS FOR A MOTOR VEHICLE SIDE WALL STRUCTURE AND METHOD OF ASSEMBLY
CONSTRUCTION DE PAROI LATÉRALE DE VÉHICULE AUTOMOBILE, ÉLÉMENTS DE PAROI LATÉRALE POUR UNE CONSTRUCTION DE PAROI LATÉRALE DE VÉHICULE AUTOMOBILE, AINSI QUE PROCÉDÉ DE MONTAGE

(43) Veröffentlichungstag der Anmeldung: 15.11.2023
(73) Patentinhaber: Ambulanz Mobile GmbH & Co. KG, 39218 Schönebeck (DE)
(72) Erfinder: Schwarz, Hans-Jürgen, 39218 Schönebeck (DE)
(74) Vertreter: Freischem & Partner Patentanwälte mbB

(56) Entgegenhaltungen:
- EP-A1- 3 656 607
- EP-B1- 0 803 403
- WO-A1-2014/080734
- DE-A1- 3 344 995
- FR-A1- 2 979 316

## Beschreibung

Die Erfindung betrifft eine Kraftfahrzeug-Seitenwandkonstruktion für ein Kraftfahrzeug. Insbesondere betrifft die Erfindung eine Seitenwandkonstruktion zur Verkleidung der Seitenwände von Kastenwagen oder anderen Nutzfahrzeugen, welche von Fahrzeugherstellern angeboten werden und von Aufbauherstellern häufig als Basis für einen individualisierten Innenausbau verwendet werden.

Weiterhin betrifft die Erfindung insbesondere Spezialfahrzeuge in Form von Ambulanzfahrzeugen, Speditionsfahrzeugen, Handwerkerfahrzeugen oder in Form von sonstigen, mit einer speziellen Seitenwandkonstruktion versehenen Fahrzeugen.

Die Erfindung bezieht sich insbesondere auf Spezialfahrzeuge, die einen Spezial-Nutzraum aufweisen, der innerhalb des Kraftfahrzeuges in Fahrzeuglängsrichtung betrachtet hinter einer Fahrerkabine angeordnet ist. Dieser Spezial-Nutzraum kann insbesondere vollständig von dem Raum einer Fahrerkabine abgetrennt sein. Bei einem Ambulanzfahrzeug beispielsweise kann es sich bei dem Spezial-Nutzraum um einen Transportraum für den sitzenden und/oder liegenden Transport von zu transportierenden Personen aufweisen.

Meist sind solche Ambulanzfahrzeuge mit Kennleuchten oder Warnleuchten versehen, mit welchen bedarfsweise im Straßenverkehr eine Vorrangstellung eingenommen werden kann. Insbesondere wird in Verbindung mit der Erfindung auf Ambulanzfahrzeuge in Form von Krankentransportwagen und Rettungstransportwagen verwiesen.

Bei den aus der Praxis bekannten Spezialfahrzeugen, insbesondere den vorstehend genannten Ambulanzfahrzeugen, wurden in der Vergangenheit die Seitenwandkonstruktionen durch Verkleben von einem großflächigen Seitenwandelement oder durch das Verkleben mehrerer großflächiger Seitenwandelemente mit der Innenseite des Fahrzeugs erstellt, um eine individuelle Seitenwandverkleidung herzustellen. In den meisten Fällen wurden häufig zunächst die großen Seitenwandelemente als separate Bauteile erstellt. Anschließend wurden diese mit der Fahrzeugseitenwand verklebt.

Als Seitenwandverkleidung für die Erfindung werden alle Elemente verstanden, die sich ausgehend von dem Fahrzeugdach - oder falls eine Dachverkleidung vorgesehen ist, ausgehend von dem obersten Dachverkleidungselement - im Wesentlichen in Fahrzeughochrichtung erstrecken, um die rechte oder linke verbleibende Fahrzeugwand zu verkleiden und optional auch durch eine funktionale Gestaltung mit zusätzlichen Funktionen auszustatten, beispielsweise verschließbare oder offene Staufächer. In beiden Fällen ist eine möglichst glattflächige Gestaltung erwünscht, die möglichst frei von Fugen und Öffnungen sein soll, um Verletzungen zu vermeiden und die verbleibenden Flächen gut reinigen und desinfizieren zu können.

Aufgrund der glattflächigen Gestaltung der Seitenwände ergibt sich für die Insassen, insbesondere die Insassen eines Ambulanzfahrzeuges, auch ein anderes Fahrgefühl als in Kraftfahrzeugen mit Blechkonstruktionen im Bereich der Seitenwände.

Das Verkleben des einen Seitenwandelements oder der mehreren Seitenwandelemente mit einer Fahrzeugwand hat den Nachteil, dass die Innenseite der Fahrzeugwand nach dem Verkleben mit dem einen Seitenwandelement und oder den mehreren Seitenwandelementen nicht mehr zerstörungsfrei großflächig zugänglich ist. Dies kann zu hohem Wartungs- und Reparaturaufwand führen bzw. beschränkt die Zugänglichkeit auf Bereiche hinter den Seitenwandelementen.

Aus FR 2 979 316 A1 ist eine Seitenwandkonstruktion mit einer gekrümmten Kupplungskontur bekannt, die eine hohe Genauigkeit bei der Montage erfordert und darüber hinaus keinen Toleranzausgleich ermöglicht.

Aus EP 0 803 403 B1 ist eine lösbare Befestigung von Verkleidungsteilen im Innenraum von Kraftfahrzeugen bekannt, die zwar einen Toleranzausgleich ermöglicht, jedoch den Nachteil aufweist, dass die unteren Kanten der Seitenwandelemente von einem überseitig u-förmig ausgebildeten Verkleidungsteil aufgenommen werden. Dadurch sammeln sich Flüssigkeiten, die von einem Seitenwandelement schwerkraftbedingt in Richtung des sich unterseitig anschließenden Verkleidungselements ablaufen, in dem u-förmig ausgebildeten Verkleidungsteil. Dies ist - insbesondere bei Ambulanzfahrzeugen - unerwünscht.

Aus DE 33 44 995 A1 ist eine Verbindung zwischen Verkleidungselementen und einem Kastengerippe eines Fahrzeugs mittels Klettverschlusses bekannt. Dies ermöglicht zwar einen Toleranzausgleich, bietet aber keine Führung bei der Montage, so dass es zu einer individuellen Relativpositionierung der Verkleidungselemente kommt. WO 2014/080734 A1 offenbart eine Kraftfahrzeug-Seitenwandkonstruktion gemäß dem Oberbegriff des Anspruchs 1.

Der Erfindung liegt die Aufgabe zugrunde, eine Kraftfahrzeug-Seitenwandkonstruktion zur Verfügung zu stellen, mit welcher die vorstehend genannten Nachteile möglichst vermieden werden und insbesondere die Montage verbessert werden kann.

Die Lösung der Aufgabe erfolgt mit den Merkmalen des Anspruchs 1. Weitere Vorteile und praktische Ausführungsformen sind in Verbindung mit den abhängigen Ansprüchen beschrieben.

Bei einer erfindungsgemäßen Kraftfahrzeug-Seitenwandkonstruktion für ein Kraftfahrzeug mit einer Fahrzeugwand und mindestens einem innenseitig der Fahrzeugwand angeordneten ersten Seitenwandelement, das zur Herstellung einer Seitenwandverkleidung dient und relativ gegenüber der Fahrzeugwand befestigt ist, ist ein zweites Seitenwandelement unmittelbar angrenzend oberhalb oder unterhalb des ersten Seitenwandelements derart angeordnet, dass durch Einstecken des ersten Seitenwandelements in einen korrespondierenden, mit dem Einsteckabschnitt des ersten Seitenwandelements zusammenwirkenden Aufnahmeabschnitt des zweiten Seitenwandelements eine in Fahrzeugquerrichtung formschlüssige Verbindung hergestellt ist. Mit anderen Worten ausgedrückt, werden bei einer erfindungsgemäßen Kraftfahrzeug-Seitenwandkonstruktion mindestens zwei Seitenwandelemente dadurch miteinander verbunden, dass diese aufeinander abgestimmt sind und ineinandergesteckt werden können, so dass sich eine in Fahrzeugquerrichtung formschlüssige Verbindung ergibt. Die in Fahrzeugquerrichtung formschlüssige Verbindung ist vorzugsweise als spielfreie Verbindung ausgelegt.

Dabei ist der Aufnahmeabschnitt im Bereich einer Seitenkante auf der im Endmontagezustand dem Fahrzeuginnenraum abgewandten Seite angeordnet, und an dem Aufnahmeabschnitt ist ein Einführabschnitt mit einem im Einbauzustand schräg in Fahrzeughochrichtung und in Fahrzeugquerrichtung orientierten Wandbereich ausgebildet.

Dabei weist ein Seitenwandelement einen Einsteckabschnitt auf, wobei der Einsteckabschnitt einen nach fahrzeugaußen gerichteten Versatz aufweist.

Dabei ist der Aufnahmeabschnitt des zweiten Seitenwandelements durch einen inneren, zum Fahrzeuginnenraum orientierten Wandabschnitt und einen äußeren, auf der dem Fahrzeuginnenraum abgewandten Seite des inneren Wandabschnitts angeordneten Wandabschnitt gebildet. Der äußere Wandabschnitt umfasst einen sich über eine erste Höhe hF erstreckenden Führungsabschnitt F, und der Einführabschnitt E schließt sich unterseitig des Führungsabschnitts an. Der äußere Wandabschnitt erstreckt sich in dem Einführabschnitt E ausgehend von dem Führungsabschnitt F in Fahrzeughochrichtung nach unten und in Fahrzeugquerrichtung nach fahrzeugaußen. Außerdem ist der Einsteckabschnitt durch einen sich über eine zweite Höhe erstreckenden oberen Wandabschnitt gebildet, die zweite Höhe hE des Einsteckabschnitts ist von einer Oberkante bis zu einem Versatz gemessen, und der Versatz ist dadurch gebildet, dass der Wandabschnitt eine S-förmige Krümmung aufweist.

Eine spielfreie Verbindung wird insbesondere dann erzeugt, wenn das Ineinanderstecken des ersten Seitenwandelements und des zweiten Seitenwandelements unter Anwendung einer Einsteckkraft erfolgen muss, so dass sich in Einsteckrichtung zusätzlich eine kraftschlüssige Verbindung zwischen dem ersten Seitenwandelement und dem zweiten Seitenwandelement ergibt. Auf Einzelheiten dazu wird im Folgenden in Verbindung mit den abhängigen Ansprüchen noch im Detail eingegangen.

Die erfindungsgemäße Kraftfahrzeug-Seitenwandkonstruktion ermöglicht es, die Seitenwandverkleidung eines Kraftfahrzeuges modular zu gestalten. Insbesondere können Seitenwände von Kraftfahrzeugen mit dieser Kraftfahrzeug-Seitenwandkonstruktion schnell und einfach ausgekleidet und auch modifiziert werden, indem zwei, drei oder mehr Seitenwandelemente übereinander angeordnet werden. Vorzugsweise ist auf jedem Höhenniveau jeweils nur ein Seitenwandelement vorgesehen, beispielsweise ein oberes und ein unteres Seitenwandelement oder ein oberes, ein mittleres und ein unteres Seitenwandelement. Dann entstehen keine vertikal verlaufenden Trennfugen zwischen zwei oder mehr Seitenwandelementen, die auf dem gleichen Höhenniveau angeordnet sind.

Die modulare Bauweise, insbesondere in vertikaler Richtung übereinander, ist insbesondere in Verbindung mit Ambulanzfahrzeugen von besonderem Vorteil, nicht um bei der erstmaligen Auskleidung des Ambulanzfahrzeuges eine hohe Flexibilität zu ermöglichen, sondern auch um später auf einfache Art und Weise eine Demontage für eine Reparatur oder eine Modifikation der Gestaltung der Seitenwandverkleidungen zu ermöglichen.

In einer praktischen Ausführungsform einer erfindungsgemäßen Kraftfahrzeug-Seitenwandkonstruktion entspricht die Breite bA des Aufnahmeabschnitts zumindest in einem Teilabschnitt der Höhe des Aufnahmeabschnitts der Breite bE des Einführabschnitts, oder die Breite bA des Aufnahmeabschnitts ist kleiner als die Breite bE des Einsteckabschnitts. Auf diese Art und Weise kann ohne weitere konstruktive Maßnahmen oder zusätzliche Elemente eine spielfreie formschlüssige Verbindung in Fahrzeugquerrichtung hergestellt werden. Sofern die Breite bA des Aufnahmeabschnitts der Breite bE des Einsteckabschnitts entspricht, handelt es sich um eine Übergangspassung mit annähernd kraftfreier Montage. Ist die Breite bA des Aufnahmeabschnitts kleiner als die Breite bE des Einsteckabschnitts, ergibt sich eine klemmende Fixierung, insbesondere durch eine erforderlich elastische Komprimierung des Einsteckabschnitts und/oder eine elastische Ausweitung des Aufnahmeabschnitts.

In einer weiteren praktischen Ausführungsform einer erfindungsgemäßen Kraftfahrzeug-Seitenwandkonstruktion ist der Einsteckabschnitt im Endmontagezustand in Fahrzeughochrichtung um eine Höhe hE gegenüber einem dieses Fahrzeug innenseitig überdeckenden unteren Ende des Aufnahmeabschnitts hervorragend angeordnet. Dies hat den Vorteil, dass Flüssigkeit, welche durch den sich ergebenden Spalt zwischen dem ersten Seitenwandelement und dem zweiten Seitenwandelement in den Bereich hinter die Seitenwandelemente gelangen könnte, zunächst die Höhe hE überwinden müsste, um in den Bereich hinter den Seitenwandelementen gelangen zu können. Durch geeignete Auslegung der Höhe hE kann sichergestellt werden, dass auch ohne weitere Maßnahmen beim bestimmungsgemäßen Betrieb eines Kraftfahrzeuges mit einer erfindungsgemäßen Kraftfahrzeug-Seitenwandkonstruktion keine Flüssigkeiten in den Bereich hinter die Seitenwandelemente gelangen. Vorzugsweise beträgt die Höhe hE mindestens 5 mm, weiter bevorzugt mindestens 10 mm und besonders bevorzugt mindestens 15 mm oder mindestens 20 mm.

In einer weiteren praktischen Ausführungsform einer erfindungsgemäßen Kraftfahrzeug-Seitenwandkonstruktion sind das erste Seitenwandelement und das zweite Seitenwandelement aufgrund der Gestaltung des Einsteckabschnitts und des Aufnahmeabschnitts zumindest in dem zum Fahrzeuginnenraum gerichteten Stoßstellenbereich flächenbündig zueinander ausgerichtet. Dies hat den Vorteil, dass die konstruktive Gestaltung des ersten Seitenwandelements und des zweiten Seitenwandelements bereits eine Relativpositionierung der Seitenwandelemente zueinander während der Montage bewirkt. So kann auf einfache Art und Weise sichergestellt werden, dass trotz modularer Gestaltung einer Seitenwandverkleidung mit zwei oder mehr Seitenwandelementen eine exakte Relativausrichtung der Seitenwandelemente zueinander bewirkt wird. Dadurch ergibt sich eine Seitenwandverkleidung, die hohen haptischen und optischen Qualitätsanforderungen entspricht. Insbesondere werden zusätzliche Anweisungen für Montagepersonal obsolet, da eine Relativausrichtung konstruktiv vorgegeben ist und das Risiko fehlerhaft relativ zueinander ausgerichteter Seitenwandelemente praktisch ausgeschlossen ist.

Wenn in einem zum Fahrzeuginnenraum gerichteten Stoßstellenbereich zwischen dem ersten Seitenwandelement und dem zweiten Seitenwandelement im Endmontagezustand einer Vertiefung ausgebildet ist, ergibt sich ein optisch ansprechendes Bild der Seitenwandelemente. Dies gilt insbesondere für Vertiefungen, die durch jeweilige Verrundung der aneinander angrenzenden Bereiche des ersten Seitenwandelements und des zweiten Seitenwandelements gebildet sind.

Optional kann eine wie vorstehend beschriebene Vertiefung im Stoßstellenbereich zwischen dem ersten Seitenwandelement und dem zweiten Seitenelement auch für die Anordnung eines Dichtmaterials genutzt werden. Dabei wird vorzugsweise der Bereich der Vertiefung vollflächig mit Dichtmaterial ausgefüllt, um eine Abdichtung zwischen dem ersten Seitenwandelement und dem zweiten Seitenwandelement zu erzeugen.

Wenn das Dichtmaterial in der gleichen Farbe verwendet wird wie das erste Seitenwandelement und das zweite Seitenwandelement, ergibt sich eine besonders ansprechende Gestaltung, bei welcher die modulare Bauweise der Kraftfahrzeug-Seitenwandkonstruktion praktisch nicht mehr optisch in Erscheinung tritt und ein Eindringen von Flüssigkeit durch den Stoßstellenbereich in dem Bereich hinter die Seitenwandelemente praktisch ausgeschlossen ist. Alternativ kann das Dichtmaterial auch bewusst andersfarbig gewählt werden, um optische Akzente zu setzen. Unabhängig von der Farbgebung ist es bevorzugt, das Dichtmaterial flächenbündig zu den angrenzenden Oberflächen der Seitenwandelemente aufzubringen, um einen glattflächigen Übergang zwischen den Seitenwandelementen zu schaffen.

Bei der Auskleidung von Kraftfahrzeugen mit Seitenwandelementen ergibt sich in der Praxis häufig das Problem, dass die Fahrzeugwand, an welcher die Seitenwandelemente befestigt werden sollen, nicht über den mit einem Seitenwandelement korrespondierenden Bereich der jeweiligen Fahrzeuglänge und/oder der Fahrzeughöhe glattflächig ausgebildet ist. So stehen beispielsweise Radkästen von Kraftfahrzeugen häufig in Richtung Innenraum eines Fahrzeuges hervor. Wenn mit der Kraftfahrzeug-Seitenwandkonstruktion dennoch ein glattflächiger Bereich erzeugt werden soll, welcher sich über im Bereich der Seitenwandelemente unebene oder hervorragende Abschnitte erstrecken soll, beispielsweise über einen in Fahrzeugquerrichtung hervorragenden Radkasten, kann es erforderlich werden, dass teilweise Abstände zwischen der Fahrzeugwand und dem Seitenwandelement in Endmontagelage überbrückt werden müssen. Um in solchen Fahrzeugabschnitten eine einfache und auch reversible Montage zu ermöglichen, ist es bevorzugt, wenn das erste Seitenwandelement und/oder das zweite Seitenwandelement zusätzlich mittels eines zwischen dem Seitenwandelement und der Fahrzeugwand angeordneten Adapterelements fixiert ist. Es können bedarfsweise auch mehrere Adapterelemente vorgesehen sind. Eine Fixierung zwischen Adapterelement und Seitenwandelement oder zwischen Seitenwandelement und Fahrzeugwand erfolgt vorzugsweise kraftschlüssig, besonders bevorzugt über Klettelemente. In diesem Zusammenhang hat es sich in Verbindung mit Adapterelementen als besonders hilfreich erwiesen, wenn Adapterelemente dauerhaft mit der Fahrzeugwand fixiert sind, beispielsweise durch Verkleben, Verschweißen, Verschrauben, Vernieten oder auf sonstige Art und Weise, wobei an dem Adapterelement mindestens ein Klettelement zur Herstellung einer Klettverbindung mit dem Seitenwandelement angeordnet ist. Wenn an dem ersten Seitenwandelement oder an dem zweiten Seitenwandelement, das in Endmontagelage im Bereich des Adapterelements ebenfalls ein Klettelement angeordnet ist, kann das entsprechende Seitenwandelement durch einfache Klettverbindung über das Adapterelement an der Fahrzeugwand befestigt sein. Zur Demontage kann das Seitenwandelement dann jederzeit wieder durch Lösen der Klettverbindung von dem Adapterelement abgezogen werden. Dies gilt analog für direkte Verbindungen zwischen Seitenwandelement(en) und der Fahrzeugwand.

Es wird an dieser Stelle noch einmal explizit auf Kraftfahrzeuge, insbesondere in Form von Ambulanzfahrzeugen, mit einer wie vorstehend beschriebenen Kraftfahrzeug-Seitenwandkonstruktion verwiesen. Die Erfindung umfasst und bezieht sich insbesondere auch auf solche Kraftfahrzeuge.

Weitere praktische Ausführungsformen und Vorteile der Erfindung sind nachfolgend im Zusammenhang mit den Zeichnungen beschrieben. Es zeigen:
- Fig. 1: ein Kraftfahrzeug in Form eines Kastenwagens mit seitlicher Schiebetür in einer Ansicht von schräg vorne,
- Fig. 2: das Kraftfahrzeug aus Figur 1, bei welchem im Transportraum die rechte Seitenwand und die Rückwand entfernt sind, um freie Sicht auf die linke Seitenwandverkleidung zu haben, in einer Ansicht von schräg hinten,
- Fig. 3: nur den Transportraum mit der linken Seitenwandverkleidung, Dachschale und Trennwand des in den Figuren 1 und 2 gezeigten Kraftfahrzeuges,
- Fig. 4: einzelne Elemente des Transportraumes aus der Ansicht in Figur 3 in einer Explosionsdarstellung,
- Fig. 5: eine alternative Gestaltung einer linken Seitenwandverkleidung, gebildet aus drei vertikal übereinander angeordneten Seitenwandelementen,
- Fig. 6: einen Ausschnitt einer rechten Seitenwandverkleidung mit zwei vertikal übereinander angeordneten Seitenwandelementen,
- Fig. 7: eine alternative Gestaltung zu der in Fig. 6 gezeigten rechten Seitenwandverkleidung,
- Fig. 8: eine Schnittdarstellung durch eine Fahrzeugwand in einem Bereich, in welchem zwischen Fahrzeugwand und Seitenwandelement ein Adapter angeordnet ist,
- Fig. 9: zwei nur teilweise dargestellte Seitenwandelemente in relativer Ausrichtung zueinander zu Beginn eines Montagevorganges,
- Fig. 10: die zwei Seitenwandelemente aus Fig. 9 im Endmontagezustand,
- Fig. 11: die zwei Seitenwandelemente aus den Fig. 9 und 10 mit nach der Montage gebrachter Silikonfuge in dem zum Fahrzeuginnenraum orientierten Stoßstellenbereich,
- Fig. 12: eine Schnittdarstellung gemäß dem mit XII gekennzeichneten y-z-Schnitt in Figur 6 und
- Fig. 13: eine Schnittdarstellung gemäß dem mit XIII gekennzeichneten y-z-Schnitt in Figur 6.

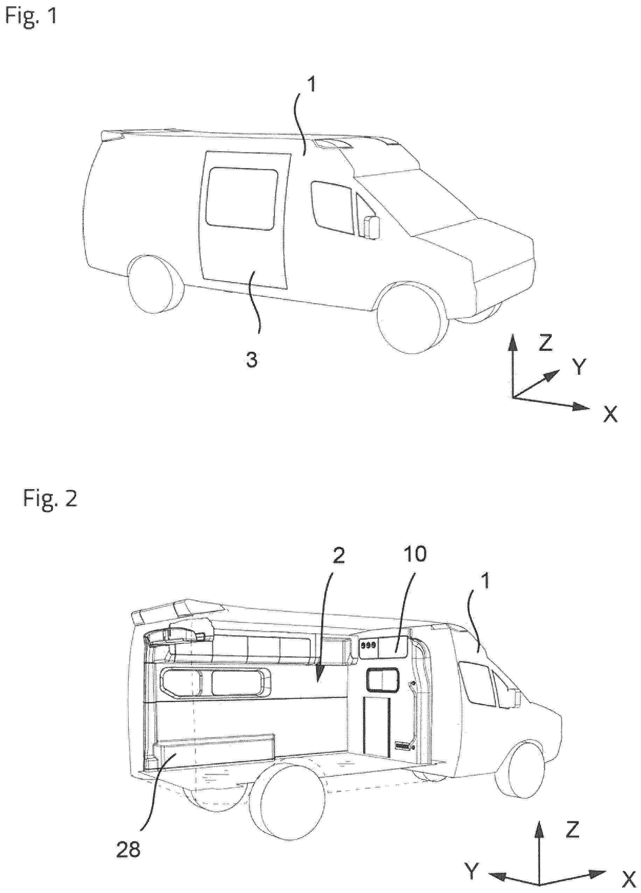

Figur 1 zeigt ein Kraftfahrzeug 1 in Form eines Kastenwagens mit einer seitlich angeordneten Schiebetür 3. Bei dem Kraftfahrzeug handelt es sich um ein Ambulanzfahrzeug.

In Figur 1 sowie in allen folgenden Figuren ist mit X die Fahrzeuglängsrichtung (X-Richtung) nach vorne, mit Y die Fahrzeugquerrichtung (Y-Richtung) und mit Z die Fahrzeughochrichtung (Z-Richtung) nach oben gekennzeichnet.

Über die Schiebetür 3 und/oder alternativ bzw. in Ergänzung dazu über eine nicht in den Figuren dargestellte Hecktür ist ein Transportraum 2 des Kraftfahrzeuges 1 zugänglich, welcher aus Figur 2 ersichtlich ist.

Figur 2 zeigt das Kraftfahrzeug 1 aus Figur 1 mit entfernter rechter Seitenwand und Rückwand. Dadurch ist der Transportraum 2 einsehbar, welcher in Fahrzeuglängsrichtung hinter einer Fahrerkabine angeordnet und durch eine Trennwand 10 von dieser separiert ist.

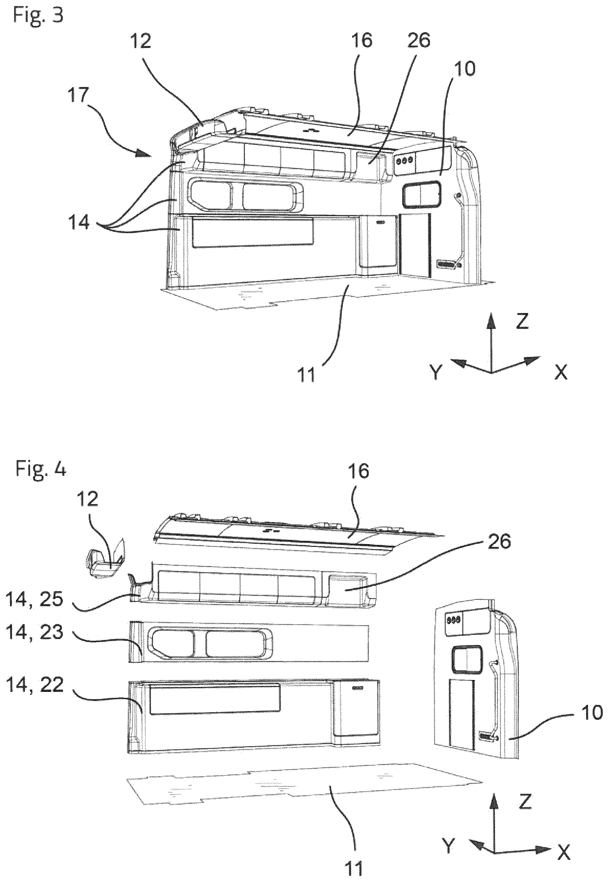

Die Figuren 3 und 4 zeigen einzelne Elemente des Transportraums 2 im Endmontagezustand (Figur 3) und in einer Explosionsdarstellung (Figur 4). In Fahrzeuglängsrichtung betrachtet, schließen sich rückseitig der Trennwand 10 oberseitig eine Dachschale 16, drei vertikal übereinander angeordnete Seitenwandelemente 14 und eine Bodenplatte 11 an. Die drei Seitenwandelemente 14 bilden eine linke Seitenwandverkleidung 17.

Bei dem obersten Seitenwandelement 14 handelt es sich um einen Hängeschrank 25 mit vier Staufächern, welche über einzelne Klappen verschlossen sind. Ferner weist das oberste Seitenwandelement 14 eine Vertiefung 26 mit einer Montagefläche für ein nicht dargestelltes Gerät auf.

Bei dem mittleren Seitenwandelement 14 handelt es sich um ein Mittelteil 23 mit Fensterausschnitten. Bei dem unteren Seitenwandelement 14 handelt es sich um ein Unterteil 22 mit zwei jeweils über eine Klappe verschließbaren Staufächern.

Rückseitig an das obere Seitenwandelement 14 und die Dachschale 16 angrenzend ist ein Heckstaufach 12 im Dachbereich vorgesehen, welches sich in Fahrzeugquerrichtung im Wesentlichen über die gesamte Breite zwischen der linken Seitenwandverkleidung 17 und der rechten, in Figur 4 nicht dargestellten Seitenwandverkleidung erstreckt.

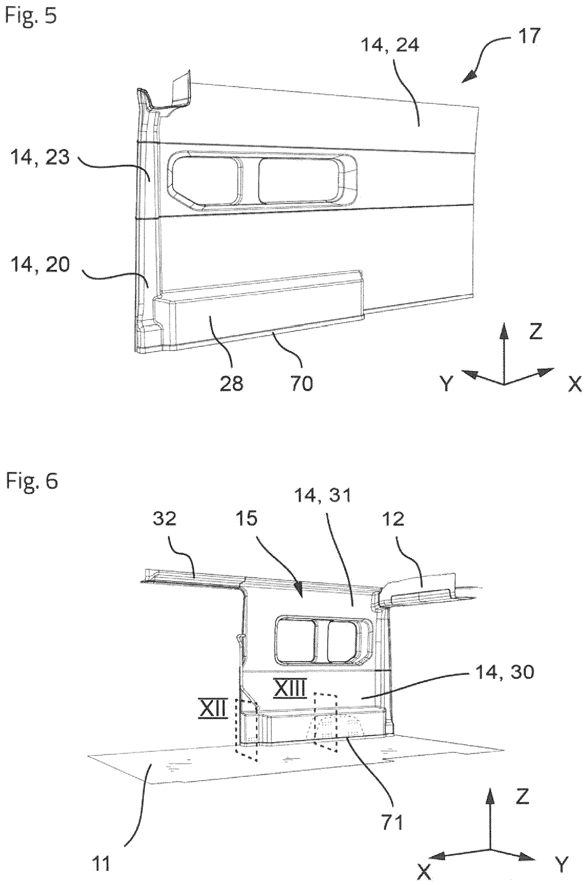

Figur 5 zeigt eine alternative Gestaltung einer linken Seitenwandverkleidung 17. Diese ist ebenfalls gebildet aus drei vertikal übereinander angeordneten Seitenwandelementen 14. Dabei ist das obere Seitenwandelement 14 eine eben und glattflächig ausgebildete Seitenwand 24. Das mittlere Seitenwandelement 14 ist das gleiche Mittelteil 23 mit Fensterausschnitten wie bei der in den Figuren 2-4 gezeigten Ausführungsform. Und das untere Seitenelement 14 ist ein überwiegend eben und glattflächig ausgebildetes Unterteil mit einer in Fahrzeugquerrichtung hervorragenden Radkastenabdeckung 28. Die Radkastenabdeckung 28 erstreckt sich in Fahrzeuglängsrichtung über einen Bereich von mehr als 1 m, hier etwa über einen Bereich von 1,5-2 m. Dies ist eine größere Länge als für den dahinterliegenden Radkasten (nicht gezeigt) erforderlich und ermöglicht es, das Unterteil 20 für verschiedene Kraftfahrzeuge 1 mit unterschiedlichen Radständen zu verwenden.

Figur 6 zeigt einen Ausschnitt einer rechten Seitenwandverkleidung 15 mit zwei vertikal übereinander angeordneten Seitenwandelementen 14. Bei dem unteren Seitenwandelement 14 handelt es sich um ein Unterteil 30 mit einer integrierten Radkastenabdeckung 28. Bei dem oberen Seitenwandelement 14 handelt es sich um ein Oberteil 31 mit Fensterausschnitten. Das Oberteil 31 erstreckt sich in Fahrzeuglängsrichtung nach hinten auch über eine oberseitige Abdeckung 32, die sich innenseitig des Kraftfahrzeugs 1 über die in Figur 1 gezeigte Schiebetür 3 erstreckt.

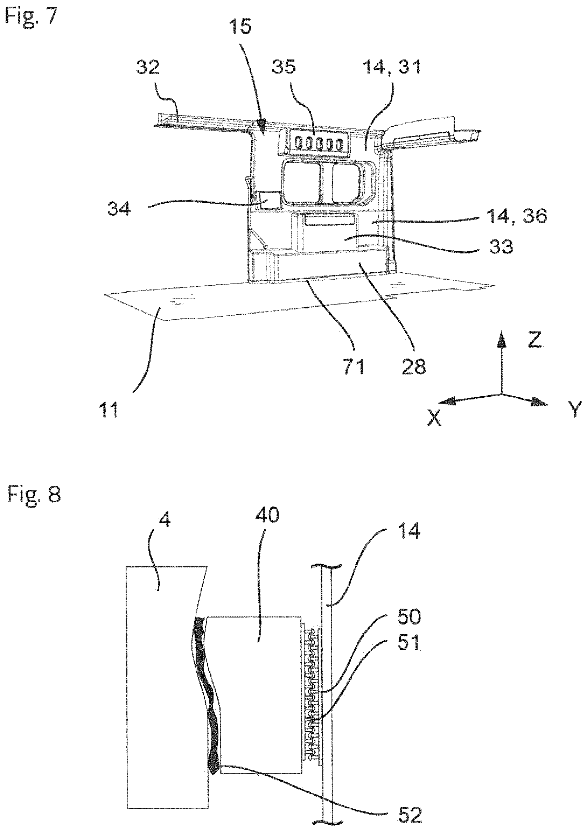

Figur 7 zeigt eine alternative Gestaltung zu der in Figur 6 gezeigten rechten Seitenverkleidung 15. Bei dieser Gestaltung sind an dem Oberteil 31, welches hinsichtlich seiner Grundgestaltung identisch zu dem in Figur 6 gezeigten Oberteil 31 ist, zusätzliche Elemente in Form eines Bedienpanels 34 und in Form eines Hängeschranks 35 vorgesehen. Diese können einstückig in dem Oberteil 31 ausgebildet oder nachträglich mit diesem verbunden sein.

Unterseitig schließt sich bei der in Figur 7 gezeigten Ausführungsform an das Oberteil 31 ein anderes Unterteil 36 an, welches zusätzlich zu der Radkastenabdeckung 28 noch ein Staufach 33 aufweist.

Figur 8 zeigt eine Schnittdarstellung durch eine Fahrzeugwand 4 in einem Bereich des Kraftfahrzeugs 1, in welchem zwischen Fahrzeugwand 4 und Seitenwandelement 14 ein Adapterelement 40 angeordnet ist.

Das Adapterelement 40 ist mittels eines Klebstoffs 52 fest mit der Fahrzeugwand 4 verbunden. Auf einer anderen Seite des Adapterelements 40, hier auf der zur Fahrzeuginnenseite gerichteten Seite, ist ein Klettelement 51 angeordnet. Dieses Klettelement 51 wirkt zusammen mit einem weiteren Klettelement 50, welches rückseitig eines Seitenwandelements 14 angeordnet ist. Das Seitenwandelement 14 ist nur ausschnittsweise in einem mittleren Bereich dargestellt, d. h. es fehlen der obere Abschnitt und der untere Abschnitt des Seitenwandelements.

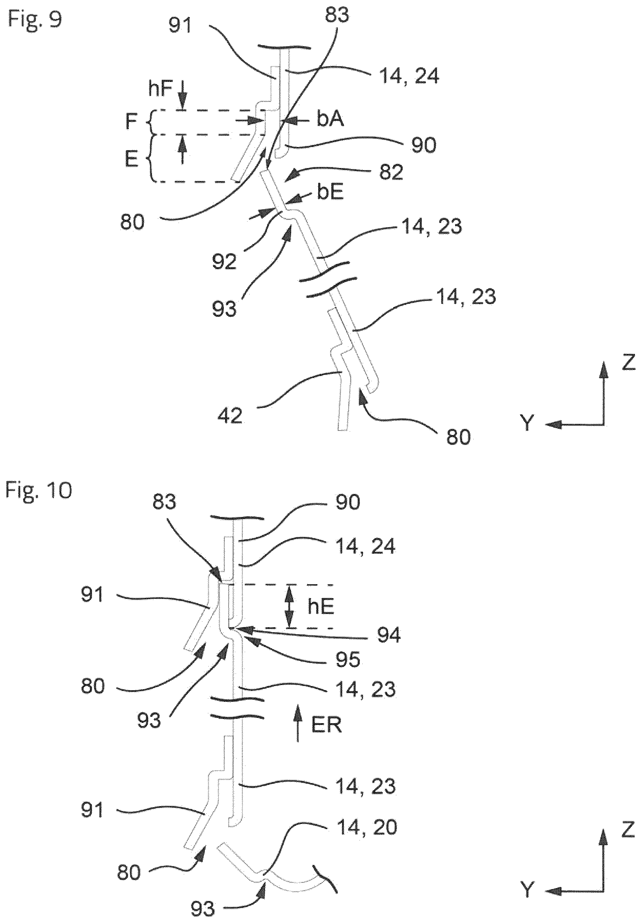

Anhand der Figuren 9-11 wird im Folgenden eine konkrete Ausführungsform von für die Erfindung vorgesehenen Seitenwandelementen 14 beschrieben, die oberseitig und unterseitig jeweils identisch ausgebildet sind. Die exemplarische Darstellung der jeweiligen Oberseite und Unterseite der Seitenwandelemente 14 erfolgt anhand der Verbindung zwischen dem Mittelteil 23 und der oberen Seitenwand 24 gemäß Figur 5.

Wie zu erkennen ist, ist an dem oberen Seitenwandelement 14 ein Aufnahmeabschnitt 80 ausgebildet. Ebenso ist an der Unterseite des unteren Seitenwandelements 14 ein Aufnahmeabschnitt 80 ausgebildet. Die Breite bA des Aufnahmeabschnitts 80 ist über eine Höhe hF eines Führungsabschnitts F konstant. Unterhalb des Führungsabschnitts F wird die Breite in Fahrzeughochrichtung nach unten größer, wodurch der Aufnahmeabschnitt 80 trichterartig aufgeweitet ist.

Der Aufnahmeabschnitt 80 ist in der gezeigten Ausführungsform gebildet durch einen inneren Wandabschnitt 90 und einen äußeren Wandabschnitt 91. Der innere Wandabschnitt 90 ist zum Fahrzeuginnenraum orientiert. Der äußere Wandabschnitt 91 ist auf der dem Fahrzeuginnenraum abgewandten Seite des inneren Wandabschnitts 90 angeordnet.

Wie in den Figuren 9 bis 11 gut erkennbar ist, umfasst der äußere Wandabschnitt 91 einen sich über die Höhe hF erstreckenden Führungsabschnitt F. Unterseitig des Führungsabschnitts F schließt sich ein Einführabschnitt E an. In dem Einführabschnitt E erstreckt sich der äußere Wandabschnitt 91 ausgehend von dem Führungsabschnitt F in Fahrzeughochrichtung nach unten und in Fahrzeugquerrichtung nach Fahrzeug außen.

In Figur 9 ist auch der obere Bereich des unteren Seitenwandelements 14 mit dem Einsteckabschnitt 82 erkennbar. Der Einsteckabschnitt ist gebildet durch eine sich über eine Höhe hE erstreckenden oberen Wandabschnitt 92 mit einer Breite bE. Die Höhe hE des Einsteckabschnitts ist gemessen von einer Oberkante 83 bis zu einem Versatz 93. Der Versatz 93 ist in der gezeigten Ausführungsform dadurch gebildet, dass der Wandabschnitt 92 eine S-förmige Krümmung aufweist.

Zur Montage des in Figur 9 gezeigten unteren Seitenwandelements 14 mit dem oberen Seitenwandelement 14 wird die Oberkante 83 in Kontakt gebracht mit dem Einführabschnitt E. Das untere Seitenwandelement 14 kann dann durch nach oben Gleiten entlang des Einführabschnitts E und Verschwenken in eine im Wesentlichen senkrechte Orientierung in den Führungsabschnitt F gelangen. Durch Einstecken in Einsteckrichtung ER, welche vorliegend in Fahrzeughochrichtung nach oben orientiert ist, kann das untere Seitenwandelement 14 anschließend in die in Figur 10 gezeigte Relativposition verbracht werden. In dieser Relativposition, welche dem Endmontagezustand entspricht, ist der Einsteckabschnitt 82 mit seiner Oberkante 83 um die Höhe hE gegenüber dem unteren Ende 94 des Aufnahmeabschnitts 80 hervorragend angeordnet.

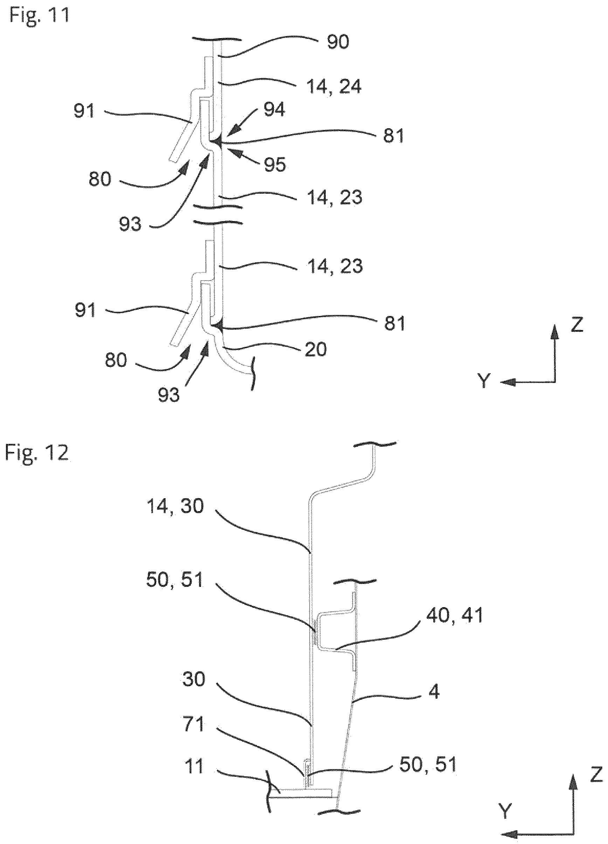

Wie in Figur 10 gut erkennbar ist, ergibt sich aufgrund der jeweils verrundeten Gestaltung des unteren Endes 94 des oberen Seitenwandelements und des sich daran unterseitig anschließenden Wandabschnitts im Bereich des Versatzes 93 eine Vertiefung 95. Diese Vertiefung ist zur sicheren Abdichtung zwischen dem oberen Seitenwandelement 14 und dem unteren Seitenwandelement 14 in Figur 11 mittels eines Dichtmaterials 81, insbesondere Silikon, ausgefüllt.

Aus den Figuren 10 und 11 ist auch erkennbar, dass sich unterseitig des Mittelteils 23 noch ein weiteres Seitenelement 14 in Form eines Unterteils 20 anschließen kann. Das Unterteil 20 weist im oberen Bereich eine Gestaltung mit einem Versatz 93 auf, welche zumindest oberhalb des Versatzes 93 identisch mit der Gestaltung der vorstehend beschriebenen Seitenwandelemente 14 ist. Die Montage des Unterteils 20 kann daher analog zu der vorstehend beschriebenen Montage erfolgen, nachdem das Mittelteil 23 vollständig montiert worden ist. Dementsprechend kann auch zwischen dem Mittelteil 23 und dem Unterteil 20 Dichtmaterial 81 angeordnet sein, um eine glattflächige zum Fahrzeuginnenraum orientierte Seitenwand zu erzeugen (vgl. Figur 11).

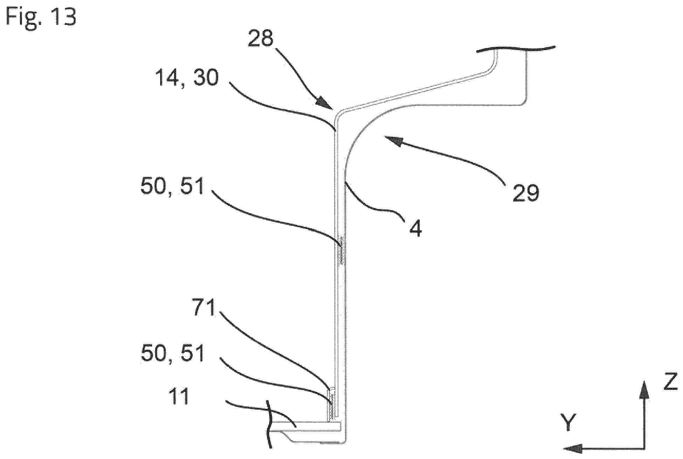

In den Figuren 12 und 13 sind die Schnittdarstellungen gemäß den in Figur 6 mit XII (Figur zwölf) bzw. XIII (Figur 13) gekennzeichneten Y-Z-Schnitten dargestellt.

In Figur 12 ist das Seitenwandelement 14 in Form des Unterteils mit Radkastenabdeckung 28 in einem Bereich erkennbar, in welchem das Seitenwandelement 14 in einem mittelgroßen Abstand zu der Fahrzeugwand 4 angeordnet ist. Dazu ist als Adapterelement 40 ein U-Profil 41 vorgesehen. Das U-Profil 41 kann insbesondere mit der Fahrzeugwand 4 verschweißt oder verklebt oder auf andere Art und Weise fest verbunden sein. Zur wieder lösbaren Befestigung des Seitenwandelements 14 sind auf der zum Fahrzeuginnenraum weisenden Fläche und auf der zum Adapterelement 40 weisenden Seite des Seitenwandelements 14 korrespondierende Klettelemente 50,51 vorgesehen.

In Figur 12 ist ferner zu erkennen, dass im Bereich des unteren Endes des Seitenwandelements 14, das im Bereich der Bodenplatte 11 endet, ebenfalls ein Klettelement 51 befestigt ist. Dieses Klettelement 51 wirkt zusammen mit einem an einer Abdeckleiste 71 vorgesehenen Klettelement 50. Durch geeignete Befestigung der Abdeckleiste 71 an der Bodenplatte 11 kann das untere Ende des Seitenwandelements 14 in eine optisch und haptisch geeignete Position gebracht werden, insbesondere derart, dass das Seitenwandelement 14 rein vertikal ausgerichtet ist.

Das vorstehend in Verbindung mit Figur 12 erläuterte, gilt sinngemäß auch für den in Figur 13 dargestellten Schnitt durch den Bereich mit der Radkastenabdeckung 28. Wie in Figur 13 erkennbar ist, ragt in dem Bereich des Radkastens 29, welcher Teil der Fahrzeugwand 4 ist, in den Fahrzeuginnenraum hinein. In diesem Bereich kann die Befestigung des Seitenwandelements 14 über unmittelbar an der zum Fahrzeuginnenraum gerichteten Seite des Radkastens 29 bzw. auf der zur Fahrzeugaußenseite gerichteten Seitenwandelements 14 angeordnete Klettelemente 50, 51 erfolgen. Die Befestigung des unteren Abschnitts des Seitenwandelements 14 erfolgt analog wie vorstehend beschrieben durch eine Abdeckleiste 71 über Klettelemente 50, 51, wobei eines der Klettelemente 51 innenseitig der Abdeckleiste 71 befestigt ist und das andere Klettelement 50 auf der zum Fahrzeuginnenraum gerichteten Seite des Seitenwandelements 14.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Kraftfahrzeug
- 2: Transportraum
- 3: Schiebetür
- 4: Fahrzeugwand
- 10: Trennwand (zwischen Transportraum und Fahrerkabine)
- 11: Bodenplatte
- 12: Heckstaufach
- 14: Seitenwandelement
- 15: rechte Seitenverkleidung
- 16: Dachschale
- 17: linke Seitenwandverkleidung
- 20: Unterteil
- 22: Unterteil
- 23: Mittelteil
- 24: Seitenwand
- 25: Hängeschrank
- 26: Vertiefung
- 28: Radkastenabdeckung
- 29: Radkasten
- 30: Unterteil
- 31: Oberteil
- 32: oberseitige Abdeckung
- 33: Staufach
- 34: Bedienpanel
- 35: Hängeschrank
- 36: Unterteil
- 40: Adapterelement
- 41: U-Profil
- 50: Klettelement
- 51: Klettelement
- 52: Klebstoff
- 71: Abdeckleiste
- 80: Aufnahmeabschnitt
- 81: Dichtmaterial
- 82: Einsteckabschnitt
- 83: Oberkante
- 90: innerer Wandabschnitt
- 91: äußerer Wandabschnitt
- 92: oberer Wandabschnitt
- 93: Versatz
- 94: unteres Ende
- 95: Vertiefung

- E: Einführabschnitt
- F: Führungsabschnitt
- ER: Einsteckrichtung
- hE: Höhe des Einsteckabschnitts
- hF: Höhe des Führungsabschnitts
- bA: Breite des Aufnahmeabschnitts
- bE: Breite des Einsteckabschnitts
- XII: Y-Z-Schnitt
- XIII: Y-Z-Schnitt

## Patentansprüche

1. Kraftfahrzeug-Seitenwandkonstruktion für ein Kraftfahrzeug (1) mit einer Fahrzeugwand (4) und mindestens einem innenseitig der Fahrzeugwand (4) angeordneten ersten unteren Seitenwandelement (14), das zur Herstellung einer Seitenwandverkleidung dient und relativ gegenüber der Fahrzeugwand (4) befestigt ist,
wobei ein zweites oberes Seitenwandelement (14) unmittelbar angrenzend oberhalb des ersten Seitenwandelements (14) derart angeordnet ist, dass durch ein Einstecken des ersten Seitenwandelements (14) in einen korrespondierenden, mit dem Einsteckabschnitt (82) des ersten Seitenwandelements (14) zusammenwirkenden Aufnahmeabschnitt (80) des zweiten Seitenwandelements (14) eine in Fahrzeugquerrichtung formschlüssige Verbindung hergestellt ist,
wobei der Aufnahmeabschnitt (80) des zweiten Seitenwandelements (14) im Bereich einer Seitenkante auf der im Endmontagezustand dem Fahrzeuginnenraum abgewandten Seite angeordnet ist und an dem Aufnahmeabschnitt (80) ein Einführabschnitt (E) mit einem im Einbauzustand schräg in Fahrzeughochrichtung und in Fahrzeugquerrichtung orientierten Wandbereich ausgebildet ist und wobei der Einsteckabschnitt (82) einen nach fahrzeugaußen gerichteten Versatz (93) aufweist,
**dadurch gekennzeichnet,**
**dass** der Aufnahmeabschnitt (80) des zweiten Seitenwandelements (14) durch einen inneren zum Fahrzeuginnenraum orientierten Wandabschnitt (90) und einen äußeren auf der dem Fahrzeuginnenraum abgewandten Seite des inneren Wandabschnitts (90) angeordneten Wandabschnitt (91) gebildet ist, dass der äußere Wandabschnitt (91) einen sich über eine erste Höhe (hF) erstreckenden Führungsabschnitt (F) umfasst, dass sich der Einführabschnitt (E) unterseitig des Führungsabschnitts (F) anschließt, dass sich der äußere Wandabschnitt (91) in dem Einführabschnitt (E) ausgehend von dem Führungsabschnitt (F) in Fahrzeughochrichtung nach unten und in Fahrzeugquerrichtung nach fahrzeugaußen erstreckt, dass der Einsteckabschnitt (82) durch einen sich über eine zweite Höhe (hE) erstreckenden oberen Wandabschnitt (92) gebildet ist, dass die zweite Höhe (hE) des Einsteckabschnitts (E) von einer Oberkante 83 bis zu einem Versatz (93) gemessen ist und dass der Versatz (93) dadurch gebildet ist, dass der Wandabschnitt eine S-förmige Krümmung aufweist.

2. Kraftfahrzeug-Seitenwandkonstruktion nach dem vorstehenden Anspruch, **dadurch gekennzeichnet, dass** die Breite (bA) des Aufnahmeabschnitts (80) zumindest in einem Teilabschnitt der Höhe des Aufnahmeabschnitts (80) der Breite (bE) des Einsteckabschnitts (82) entspricht oder kleiner ist als die Breite (bE) des Einsteckabschnitts (82).

3. Kraftfahrzeug-Seitenwandkonstruktion nach einem der vorstehenden Ansprüche, **dadurch gekennzeichnet, dass** der Einsteckabschnitt (82) im Endmontagezustand in Fahrzeughochrichtung um eine Höhe (hE) gegenüber einem diesen fahrzeuginnenseitig überdeckenden unteren Ende (94) des Aufnahmeabschnitts (80) hervorragend angeordnet ist.

4. Kraftfahrzeug-Seitenwandkonstruktion nach einem der vorstehenden Ansprüche, **dadurch gekennzeichnet, dass** das erste Seitenwandelement (14) und das zweite Seitenwandelement (14) aufgrund der Gestaltung des Einsteckabschnitts (82) und des Aufnahmeabschnitts (80) zumindest in dem zum Fahrzeuginnenraum gerichteten Stoßstellenbereich flächenbündig zueinander ausgerichtet sind.

5. Kraftfahrzeug-Seitenwandkonstruktion nach einem der vorstehenden Ansprüche, **dadurch gekennzeichnet, dass** in einem zum Fahrzeuginnenraum gerichteten Stoßstellenbereich zwischen dem ersten Seitenwandelement (14) und dem zweiten Seitenwandelement (14) im Endmontagezustand eine Vertiefung (26, 95) ausgebildet ist.

6. Kraftfahrzeug-Seitenwandkonstruktion nach einem der vorstehenden Ansprüche, **dadurch gekennzeichnet, dass** das erste Seitenwandelement (14) und/oder das zweite Seitenwandelement (14) zusätzlich mittels eines zwischen dem Seitenwandelement (14) und der Fahrzeugwand (4) angeordneten Adapterelements (40) fixiert ist.

7. Kraftfahrzeug-Seitenwandkonstruktion nach einem der vorstehenden Ansprüche, **dadurch gekennzeichnet, dass** an dem ersten Seitenwandelement (14), an dem zweiten Seitenwandelement (14) mindestens ein Klettelement (50, 51) zur Herstellung einer Klettverbindung angeordnet ist.

## Claims

1. Motor vehicle side wall construction for a motor vehicle (1) having a vehicle wall (4) and at least one first lower side wall element (14) which is arranged on the inside of the vehicle wall (4), serves to produce a side wall trim and is fastened relative to the vehicle wall (4),
wherein a second upper side wall element (14) is arranged directly adjacent above the first side wall element (14) in such a way that by inserting the first side wall element (14) into a corresponding receiving portion (80) of the second side wall element (14), which receiving portion cooperates with the insertion portion (82) of the first side wall element (14), a form-fit connection is produced in the transverse direction of the vehicle,
wherein the receiving portion (80) of the second side wall element (14) is arranged in the region of a side edge on the side facing away from the vehicle interior in the final installed state and an insertion portion (E) is formed on the receiving portion (80) with a wall region which, in the installed state, is oriented obliquely in the vehicle vertical direction and in the vehicle transverse direction, and wherein the insertion portion (82) has an offset (93) directed towards the outside of the vehicle,
**characterized in**
**that** the receiving section (80) of the second side wall element (14) is formed by an inner wall section (90) oriented towards the vehicle interior and an outer wall section (91) arranged on the side of the inner wall section (90) facing away from the vehicle interior, in that the outer wall section (91) comprises a guide section (F) extending over a first height (hF), in that the insertion section (E) adjoins on the underside of the guide section (F), in that the outer wall section (91) in the insertion section (E) extends downwards from the guide section (F) in the vehicle vertical direction and outwards in the vehicle transverse direction, in that the insertion section (82) is formed by an upper wall section (92) extending over a second height (hE), in that the second height (hE) of the insertion section (E) is measured from an upper edge (83) to an offset (93), and in that the offset (93) is formed in that the wall section has an S-shaped curvature.

2. Motor vehicle side wall construction according to the preceding claim, **characterized in that** the width (bA) of the receiving section (80) corresponds to the width (bE) of the insertion section (82) at least in a partial section of the height of the receiving section (80) or is smaller than the width (bE) of the insertion section (82).

3. Motor vehicle side wall construction according to one of the preceding claims, **characterized in that** the insertion section (82) in the final assembly state is arranged protruding in the vehicle vertical direction by a height (hE) relative to a lower end (94) of the receiving section (80) covering it on the inside of the vehicle.

4. Motor vehicle side wall construction according to one of the preceding claims, **characterized in that** the first side wall element (14) and the second side wall element (14) are aligned flush with one another at least in the joint region directed towards the vehicle interior due to the design of the insertion section (82) and the receiving section (80).

5. Motor vehicle side wall construction according to one of the preceding claims, **characterized in that** a depression (26, 95) is formed in a joint region directed towards the vehicle interior between the first side wall element (14) and the second side wall element (14) in the final assembly state.

6. Motor vehicle side wall construction according to one of the preceding claims, **characterized in that** the first side wall element (14) and/or the second side wall element (14) is additionally fixed by means of an adapter element (40) arranged between the side wall element (14) and the vehicle wall (4).

7. Motor vehicle side wall construction according to one of the preceding claims, **characterized in that** at least one velcro element (50, 51) is arranged on the first side wall element (14) and on the second side wall element (14) to produce a velcro connection.

## Revendications

1. Construction de paroi latérale de véhicule automobile pour un véhicule automobile (1) avec une paroi de véhicule (4) et au moins un premier élément de paroi latérale inférieur (14) disposé à l'intérieur de la paroi de véhicule (4), qui sert à la fabrication d'un revêtement de paroi latérale et qui est fixé relativement à la paroi de véhicule (4),
un deuxième élément de paroi latérale supérieur (14) étant disposé de manière directement adjacente au-dessus du premier élément de paroi latérale (14) de telle sorte que, par un enfichage du premier élément de paroi latérale (14) dans une section de réception (80) correspondante du deuxième élément de paroi latérale (14), coopérant avec la section d'enfichage (82) du premier élément de paroi latérale (14), une liaison par complémentarité de forme est réalisée dans la direction transversale du véhicule,
la section de réception (80) du deuxième élément de paroi latérale (14) étant disposée dans la zone d'un bord latéral sur le côté opposé à l'habitacle du véhicule à l'état de montage final et une section d'insertion (E) étant formée sur la section de réception (80) avec une zone de paroi orientée en biais dans le sens de la hauteur du véhicule et dans le sens transversal du véhicule à l'état de montage et la section d'insertion (82) présentant un décalage (93) dirigé vers l'extérieur du véhicule,
**caractérisé en ce que**
la section de réception (80) du deuxième élément de paroi latérale (14) est formée par une section de paroi intérieure (90) orientée vers l'habitacle du véhicule et une section de paroi extérieure (91) disposée sur le côté de la section de paroi intérieure (90) opposé à l'habitacle du véhicule, **en ce que** la section de paroi extérieure (91) comprend une section de guidage (F) s'étendant sur une première hauteur (hF), **en ce que** la section d'insertion (E) se raccorde en dessous de la section de guidage (F), **en ce que** la section de paroi extérieure (91) s'étend dans la section d'insertion (E), à partir de la section de guidage (F), vers le bas dans le sens de la hauteur du véhicule et vers l'extérieur du véhicule dans le sens transversal du véhicule, **en ce que** la section d'insertion (82) est formée par une section de paroi supérieure (92) s'étendant sur une deuxième hauteur (hE), **en ce que** la deuxième hauteur (hE) de la section d'insertion (E) est mesurée depuis un bord supérieur (83) jusqu'à un décalage (93) et **en ce que** le décalage (93) est formé par le fait que la section de paroi présente une courbure en forme de S.

2. Construction de paroi latérale de véhicule automobile selon la revendication précédente, **caractérisée en ce que** la largeur (bA) de la section de réception (80) correspond à la largeur (bE) de la section d'insertion (82) ou est inférieure à la largeur (bE) de la section d'insertion (82) au moins dans une section partielle de la hauteur de la section de réception (80).

3. Construction de paroi latérale de véhicule automobile selon l'une des revendications précédentes, **caractérisée en ce que** la section d'emboîtement (82), à l'état de montage final, est disposée de manière saillante dans le sens de la hauteur du véhicule d'une hauteur (hE) par rapport à une extrémité inférieure (94) de la section de réception (80) recouvrant celle-ci du côté intérieur du véhicule.

4. Construction de paroi latérale de véhicule automobile selon l'une des revendications précédentes, **caractérisée en ce que** le premier élément de paroi latérale (14) et le deuxième élément de paroi latérale (14) sont alignés à fleur l'un par rapport à l'autre au moins dans la zone de jonction orientée vers l'habitacle du véhicule, en raison de la configuration de la section d'insertion (82) et de la section de réception (80).

5. Construction de paroi latérale de véhicule automobile selon l'une des revendications précédentes, **caractérisée en ce qu'**un renfoncement (26, 95) est formé dans une zone de jonction orientée vers l'intérieur du véhicule entre le premier élément de paroi latérale (14) et le deuxième élément de paroi latérale (14) à l'état de montage final.

6. Construction de paroi latérale de véhicule automobile selon l'une des revendications précédentes, **caractérisée en ce que** le premier élément de paroi latérale (14) et/ou le deuxième élément de paroi latérale (14) est en plus fixé au moyen d'un élément adaptateur (40) disposé entre l'élément de paroi latérale (14) et la paroi de véhicule (4).

7. Construction de paroi latérale de véhicule automobile selon l'une des revendications précédentes, **caractérisée en ce que** sur le premier élément de paroi latérale (14) et sur le deuxième élément de paroi latérale (14) est disposé au moins un élément auto-agrippant (50, 51) pour réaliser une liaison auto-agrippante.
